# EUROPEAN PATENT APPLICATION

(11) **EP 4 477 386 A1**
(43) Date of publication of application: **18.12.2024**
(21) Application number: 23179888.5
(22) Date of filing: 16.06.2023
(51) Int. Cl.: B29C 63/00, B29C 63/10

(54) **A REINFORCED THERMOPLASTIC CRYOSTAT FOR A HIGH TEMPERATURE SUPERCONDUCTOR**

(71) Applicant: Supernode Limited, Dublin D22HC81 (IE)
(72) Inventor: ACIN, Marcos, Dublin (IE); FRULLONI, Emiliano, Dublin (IE)
(74) Representative: FRKelly

(57) **Abstract**

The present invention provides a reinforced thermoplastic cryostat for a superconductor comprising a thermoplastic conduit and a plurality of reinforced thermoplastic tapes wound around an exterior surface of the thermoplastic conduit in a helical orientation in order to provide a reinforced yet flexible cryostat which meets desired performance and manufacturing requirements in relation to suspended cable applications.

## Description

### Field of the invention

The present invention is concerned with a thermoplastic cryostat for a high temperature superconductor (HTS), and in particular a cryostat used in a superconducting cable system and which is reinforced in a manner to provide desired characteristics including mechanical properties and the requisite thermo-hydraulic performance while facilitating a continuous manufacturing process in order to allow an overall reduction in cost.

### Background of the invention

The current state of the art in the design of high temperature superconductor (HTS) power cables includes the use of metallic alloy cryostats, typically of corrugated tubing, adopted from adjacent industrial uses such as LNG transfer solutions, to host HTS power cables and transmit pressurised cryogenic fluid to cool the HTS materials.

The metallic alloys are not efficient thermally and are not electrical insulators. This introduces challenges in the design and reliability of the cryostat system and HTS power cable. The conventional cross section of a HTS power cable system includes an inner corrugated tube arranged concentrically within the outer corrugated tube. The metallic alloy cryostats are designed to mechanically resist external mechanical loading and support a HTS power cable and cryogenic fluid within the inner corrugated tube. The corrugated profile tubing caters for the deficiencies in performance of metallic alloys including the Coefficient of Thermal Expansion (CTE) which results in the metallic alloy contracting both longitudinally and radially in dimension. These corrugations in the inner corrugated tube result in significant pressure losses in the flow of cryogenic fluid, resulting in shorter longitudinal lengths of HTS power cable systems before re-pressurisation of the cryogenic fluid is needed.

Due to the metallic alloy characteristics, the HTS power cable can include independent dielectric insulation, typically of polypropylene laminated paper (PPLP) with LN2, or equivalent, with a layer thickness proportional to the PPLP and LN2 dielectric strength and HTS power cable voltage. The dielectric may alternatively be added to the exterior of the corrugated cryostats, using conventional insulation such as XLPE. The need for the HTS power cable to have independent dielectric insulation layers results in the HTS power cable having a larger outer diameter, thus inferring that in many embodiments the inner corrugated tube can have a larger diameter to host the HTS power cable and sufficient cryogenic fluid to achieve a target mass flow rate to cool the HTS material.

There are currently no long-distance HTS power cables in operation. The longest is currently a project in development at 12km which will use the conventional HTS power cable configuration described using corrugated steel cryostat.

For short HTS power cable runs, extruded aluminium tubes or stainless-steel IC smooth-bore tubes can be used, or lined corrugated cryostats. Smooth-bore stainless steel cryostats are the most common technology for terrestrial particle accelerators or LNG transfer pipes. These are typically installed with rolling or expansion devices to accommodate thermal contraction. Typical metallic alloys like stainless steel and aluminium suffer from larger Coefficient of Thermal Expansion/Contraction values resulting in requirements for multiple bellows-based expansion joints to offset the longitudinal contraction of the metallic tubes when filled with cryogenic fluid. These joints introduce failure points and thermal leak paths in the system thus undermining reliability.

Furthermore, metallic alloys and carbon fibre composites are electrical and thermal conductors and as a result insulation layers are needed which increase the overall dimensions of the cryostat. Thermo-hydraulic performance and manufacturing and/or operating costs are worsened consequently.

Smooth-bore metallic cryostats cannot be continuously manufactured, they need to be welded in straight sections of around 12m in length and cannot be reeled into a coil for transport. This increases the cost of manufacturing, transportation and deployment of such systems. Similarly a carbon fibre thermoset cryostat cannot be reeled due to its high stiffness.

Corrugated metallic cryostats generate additional turbulence and friction with the liquid cryogenic fluids thus additional heat generation and higher-pressure losses accumulate over shorter distances thus requiring additional pressurisation points on the HTS power cable system. Long distance SCS with corrugated IC are therefore technically unfeasible.

Carbon fibre thermoset composites are known in the literature to develop cracks within the material when subjected to cryogenic environments. These cracks represent a permeability leak for the cryogenic liquid into the vacuum chamber potentially disrupting the SCS operation.

All alternative solutions are currently economically and technically unfeasible for long distance SCS deployment (i.e. in excess of 25km lengths). The present invention is capable for long distance SCS deployment at any distance including in excess of 100km.

The primary design issues and inefficiencies with state-of-the-art HTS power cable systems therefore include:
- Limited or single function layers within the cable system, for example, separate dielectric insulation on the conductor, and metallic cryostats to enclose a vacuum and cryogenic fluid;
- Complexities of design to avoid/minimise eddy currents in metallic conduits and cryostats;
- Corrugated metallic cryostats resulting in heat ingress, additional turbulence generation in liquid cryogenic fluids thus additional heat generation, higher pressure losses accumulated over shorter distances thus needing more pressurisation points on the HTS power cable system, and high friction factor heat generation resulting in the cryogenic fluid;
- Larger diameter cryostats required to host multi-layered HTS conductors resulting in greater radiative heat ingress.
- High rates of thermal contraction and expansion with changes in temperature.
- Complex manufacturability and associated costs.
- Non-corrugated steel cryostats suffer from reliability and associated mobilisation and installation complexity.
- Lack of optimisation for long distance superconductor power cables

It is therefore an object of the present invention to overcome the above mentioned problems of the prior art.

### Summary of the invention

A reinforced thermoplastic cryostat for a high temperature superconductor comprising a thermoplastic conduit and a plurality of reinforced thermoplastic tapes wound around an exterior surface of the thermoplastic conduit in a helical orientation and at a helix angle of between 20° and 50° to the axial direction, the reinforced thermoplastic cryostat further comprising at least one load carrying member.

Advantageously, the at least one load carrying member permits use of said reinforced thermoplastic cryostat and high temperature superconductor in suspended applications wherein loads/forces related to suspension are carried and/or distributed by the load carrying member.

Optionally, the at least one load carrying member may be a separate load carrying member disposed in or between any two adjacent layers of the reinforced thermoplastic cryostat, and/or one or more layers of the reinforced thermoplastic cryostat may themselves be adapted or configured to provide load carrying capability and thus form at least one load carrying member.

Optionally, the thermoplastic tapes extend at a helix angle of between 25° and 45°.

Optionally, two or more of the thermoplastic tapes extend at different helix angles.

Optionally, two or more of the thermoplastic tapes extend in opposition directions around the exterior surface of the thermoplastic conduit.

Optionally, the thermoplastic tapes are arranged in layers.

Optionally, the thermoplastic tapes of adjacent layers extend in opposition directions around the exterior surface of the thermoplastic conduit.

Optionally, the thermoplastic tapes comprise fibre reinforcement.

Optionally, the thermoplastic tapes comprise a substrate on which the reinforcing fibres are retained.

Optionally, the fibres comprise a negative coefficient of thermal expansion.

Optionally, the thermoplastic conduit comprises a polymer selected from PEEK, PA, PEI, TPI, HDPE, PP, PVDF, PPS, PPSU, PES, PSU and/or ABS.

Optionally, the thermoplastic tapes comprise a polymer selected from PEEK, PA, PEI, TPI, HDPE, PP, PVDF, PPS, PPSU, PES, PSU and/or ABS.

Optionally, the thermoplastic conduit and the thermoplastic tapes are comprised of the same material.

Optionally, the reinforcing fibres of the thermoplastic tapes comprise carbon, glass, aramid, and/or basalt.

Optionally, the cryostat comprises a coefficient of thermal expansion of between +/- 15e-6/°C, more preferably a coefficient of thermal expansion of 0/°C.

Optionally, the thermoplastic tapes comprises unidirectional fibre reinforced prepreg.

Optionally, the total radial thickness of the reinforcing tapes is greater than or equal to the radial thickness of the thermoplastic conduit.

Optionally, the thermoplastic conduit comprises a smooth bore.

Optionally, the cryostat comprises at least one impermeable barrier layer.

Optionally, at least one barrier layer surrounds the thermoplastic tapes.

Optionally, the barrier layer comprises aluminium, steel, EVOH, PET, LCP, PVDC and/or PVOH.

Optionally, the cryostat comprises a minimum bending radius of at least 0.5m.

According to another aspect there is provided a superconductor cable system for suspended cable applications comprising a reinforced thermoplastic cryostat said reinforced thermoplastic cryostat comprising a thermoplastic conduit and a plurality of reinforced thermoplastic tapes wound around an exterior surface of the thermoplastic conduit in a helical orientation and at a helix angle of between 20° and 50° to the axial direction; a superconductor extending longitudinally of the cryostat; a supply of cryogen contained within the cryostat in thermal communication with the superconductor; the superconducting cable system comprising at least one load carrying member.

Optionally, the at least one load carrying member may be disposed in the reinforced thermoplastic cryostat, and/or disposed in the wider superconductor cable system.

Optionally. the at least one load carrying member may comprise a separate load carrying member disposed in or between any two adjacent layers of the superconducting cable system, and/or one or more layers of the superconducting cable system may themselves be adapted or configured to provide load carrying capability and thus form the one or more load carrying member, the mechanical properties of said layers being configured to allow these components to sustain, carry, and/or distribute the forces resulting from suspension.

Optionally, the at least one load carrying member may comprise a separate load carrying member disposed in or between any two adjacent layers of the reinforced thermoplastic cryostat, and/or one or more layers of the reinforced thermoplastic cryostat may themselves be adapted or configured to provide load carrying capability and thus form the one or more load carrying member, the mechanical properties of said layers being configured to allow these components to sustain, carry, and/or distribute the forces resulting from suspension.

According to a further aspect there is provided a method of manufacturing a reinforced thermoplastic cryostat comprising the steps of extruding a thermoplastic conduit; winding a plurality of reinforced thermoplastic tapes around an exterior surface of the thermoplastic conduit in a helical orientation at a helix angle of between 20° and 50° to the axial direction, and providing at least one load carrying member.

Optionally, the method comprises providing at least one load carrying member which may be a separate load carrying member disposed in or between any two adjacent layers of the reinforced thermoplastic cryostat, and/or one or more layers of the reinforced thermoplastic cryostat may themselves be adapted or configured to provide load carrying capability and thus form at least one load carrying member.

Optionally, the method comprises winding the thermoplastic tapes at a helix angle of between 25° and 45°.

Optionally, the method comprises continuously manufacturing the reinforced thermoplastic cryostat.

Optionally, the method comprises winding two or more of the thermoplastic tapes at different helix angles.

Optionally, the method comprises winding the thermoplastic tapes around the conduit in a continuous process.

Optionally, the method comprises the step of bonding the thermoplastic tapes to the exterior surface of the thermoplastic conduit.

Optionally, the method comprises applying heat and/or pressure to the thermoplastic tapes to effect bonding to the exterior surface of the conduit.

Optionally, the method comprises applying a fluid impermeable barrier layer to the cryostat.

Optionally, the method comprises applying the barrier layer over and enclosing the thermoplastic tapes.

Optionally, the at least one load carrying member is configured to carry and/or distribute tensile loads in applications where the superconducting cable system is suspended.

Optionally, the at least one load carrying member may comprise one or more mechanical support.

Optionally, the at least one load carrying member may be disposed in or between any two adjacent layers of the superconducting cable system, including in any layer or between any two adjacent layers of the reinforced thermoplastic cryostat.

Optionally, a plurality of load carrying members may be disposed in any layer or between any two adjacent layers of the superconducting cable system, including in any layer or between any two adjacent layers of the reinforced thermoplastic cryostat.

Optionally, the at least one load carrying member may be disposed internally and/or externally of the superconducting cable system.

Alternatively or in combination one or more layers of the superconducting cable system may themselves be adapted or configured to provide load carrying capability and thus form the one or more load carrying member, for example, the reinforced thermoplastic cryostat may be adapted such that the mechanical properties of one or more layers thereof allow said reinforced thermoplastic cryostat to sustain, carry, and/or distribute the forces resulting from suspension.

Optionally, the at least one load carrying member extends longitudinally of the superconducting cable system.

Optionally, the at least one load carrying member may comprise one or more mechanical support and/or at least one longitudinally extending load carrying member disposed in or between any two adjacent layers of the superconducting cable system.

Optionally, the at least one load carrying member is a carbon fibre or steel rope or rope made of any other material, or a stranded member.

Optionally, Mechanical supports are provided for attachment of the superconducting cable system to a supporting structure for suspension.

Optionally, the mechanical supports may comprise tensioners, brackets, and/or means of distributing the load longitudinally such as a wire may be utilised.

### Brief description of the drawings

The present invention will now be described with reference to the accompanying drawings, in which:
Figure 1 illustrates an example embodiment of a reinforced thermoplastic cryostat;
Figure 2 illustrates a perspective view of an example embodiment of a superconducting cable system comprising the reinforced thermoplastic cryostat shown in Figure 1;
Figure 3 illustrates a perspective view of a second example embodiment of a superconducting cable system comprising the reinforced thermoplastic cryostat shown in Figure 1;
Figure 4 illustrates a perspective view of a third example embodiment of a superconducting cable system comprising the reinforced thermoplastic cryostat shown in Figure 1;
Figure 5 illustrates a perspective view of a fourth example embodiment of a superconducting cable system comprising the reinforced thermoplastic cryostat shown in Figure 1;
Figure 6 illustrates a perspective view of a superconducting cable system comprising the reinforced thermoplastic cryostat shown in Figure 1 according to a fifth example embodiment;
Figure 7 illustrates a perspective view of a superconducting cable system comprising the reinforced thermoplastic cryostat shown in Figure 1 according to a sixth example embodiment; and
Figure 8 illustrates a perspective view of a superconducting cable system comprising the reinforced thermoplastic cryostat shown in Figure 1 according to a seventh example embodiment;
Figure 9 is a cross-sectional view of an example embodiment of a superconducting cable system wherein said superconducting cable is a suspended cable and comprises at least one load carrying member;
Figure 10 is a cross-sectional view of a further example embodiment of a superconducting cable system wherein said superconducting cable is a suspended cable and comprises at least one load carrying member;
Figure 11 is a cross-sectional view of a yet further example embodiment of a superconducting cable system wherein said superconducting cable is a suspended cable and comprises at least one load carrying member;
Figure 12 is a cross-sectional view of a yet further example embodiment of a superconducting cable system wherein said superconducting cable is a suspended cable and comprises at least one load carrying member;
Figure 13 is a cross-sectional view of a yet further example embodiment of a superconducting cable system wherein said superconducting cable is a suspended cable and comprises at least one load carrying member;
Figure 14 is a cross-sectional view of a yet further example embodiment of a superconducting cable system wherein said superconducting cable is a suspended cable and comprises at least one load carrying member;
Figure 15 is a cross-sectional view of a yet further example embodiment of a superconducting cable system wherein said superconducting cable is a suspended cable and comprises at least one load carrying member;
Figure 16 is a cross-sectional view of a yet further example embodiment of a superconducting cable system wherein said superconducting cable is a suspended cable and comprises at least one load carrying member;
Figure 17 is a cross-sectional view of a yet further example embodiment of a superconducting cable system wherein said superconducting cable is a suspended cable and comprises at least one load carrying member;
Figure 18 is a cross-sectional view of a yet further example embodiment of a superconducting cable system wherein said superconducting cable is a suspended cable and comprises at least one load carrying member;
Figure 19 is a cross-sectional view of a yet further example embodiment of a superconducting cable system wherein said superconducting cable is a suspended cable and comprises at least one load carrying member;
Figure 20 is a cross-sectional view of a yet further example embodiment of a superconducting cable system wherein said superconducting cable is a suspended cable and comprises at least one load carrying member;
Figure 21 is a cross-sectional view of a yet further example embodiment of a superconducting cable system wherein said superconducting cable is a suspended cable and comprises at least one load carrying member;
Figure 22 is a cross-sectional view of a yet further example embodiment of a superconducting cable system wherein said superconducting cable is a suspended cable and comprises at least one load carrying member; and
Figure 23 is a perspective view of an embodiment of a suspended superconducting cable system.

### Detailed description of the drawings

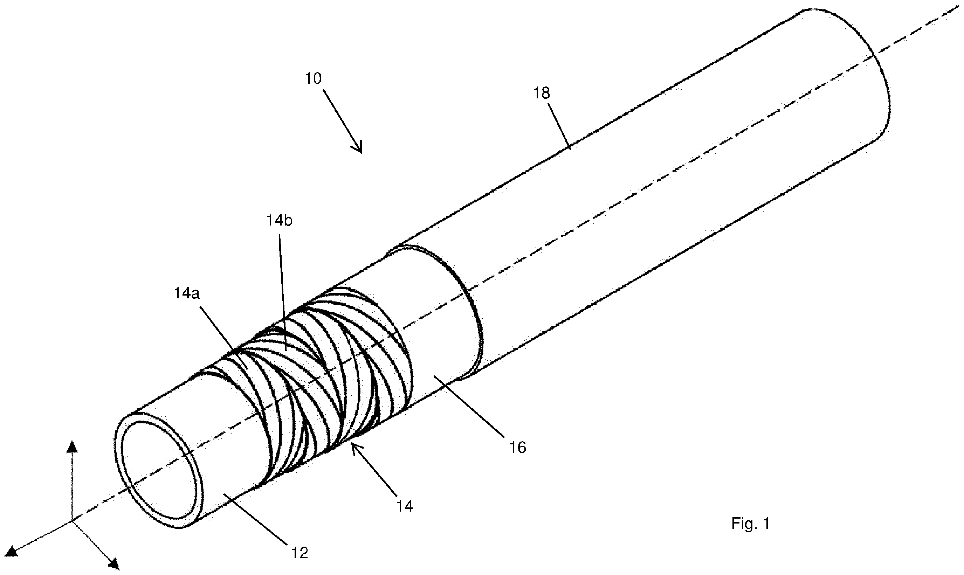

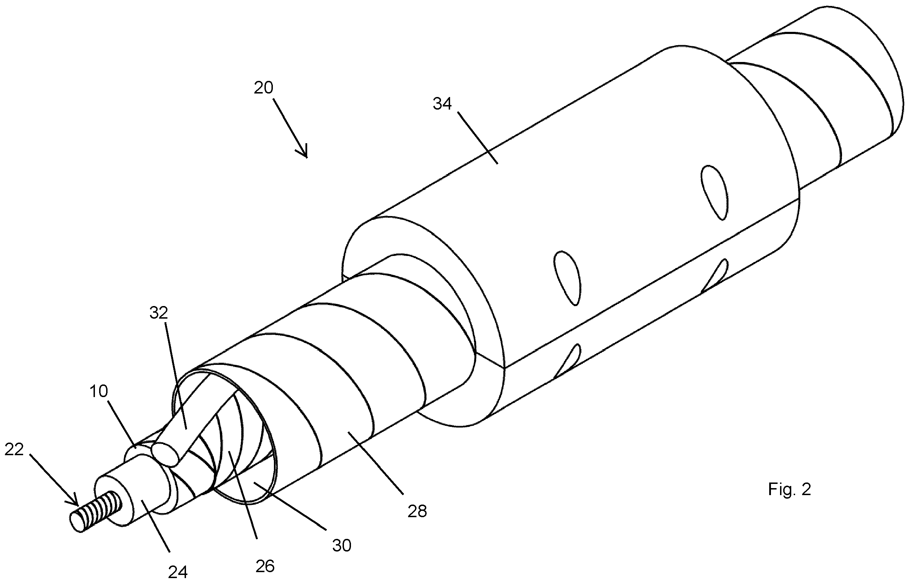

Referring now to Figure 1 of the accompanying drawings there is illustrated a perspective view of a reinforced thermoplastic tubular cryostat, generally indicated as 10, for particular use in various embodiments of superconducting cable systems as illustrated in Figures 2 to 8 and which each utilise the reinforced thermoplastic cryostat 10 in order to achieve improved performance and/or cost efficiencies.

The primary function of the cryostat 10 when used in superconducting cable applications is to contain a cryogen and to facilitate thermal communication between a superconductor and the cryogen. The cryostat 10 can also provide structural integrity against the pressurised cryogen, be a dielectric insulator, and act as a thermal insulator to minimise heat ingress from the exterior and act as a permeability barrier. In addition, to facilitate design and transportation while minimising the cost of the superconducting cable systems, the cryostat 10 can have a low coefficient of thermal expansion (CTE) to avoid or reduce the use of conventional bellows based expansion joints, be capable of being spooled into reels, and be capable of being manufactured in long lengths, for example 100m or longer, optionally 1km or longer, or optionally 10km or longer.

The cryostat 10 thus comprises an inner tubular conduit or liner 12 formed from a thermoplastic material, for example but not limited to PEEK, PA, PEI, TPI, HDPE, PP, PVDF, PPS, PPSU, PES, PSU and ABS, but it will of course be understood that other thermoplastics or blends thereof may be employed. The use of a thermoplastic allows relatively low cost manufacture, for example via continuous extrusion of the conduit or liner 12, while providing sufficient flexibility to allow for spooling. The thermoplastic of the liner 12 may be reinforced with additives or fillers in order to provide desired performance and/or mechanical characteristics to meet the above or other performance requirements.

Wrapped around the exterior surface of the liner 12 are a plurality of reinforcing bands or tapes 14 which extend in a helical orientation around the liner 12. This helical orientation provides a reinforcing function while maintaining a desired overall flexibility and permeability as hereinafter described in detail. The angle at which the tapes 14 extend relative to the longitudinal axis of the liner 12, hereinafter referred to as the "helix angle", can be varied to provide different reinforcing levels or effects. In a preferred arrangement at least two tapes 14a and 14b extend in opposition directions around the liner 12, or in other words at positive and negative helix angles relative to one another. The helix angle at which the tapes 14 extend has a significant impact on the reinforcing performance and is further discussed in detail hereinafter. The tapes 14 may also be arranged in particular layups, for example having a first layer in which one or more tapes 14a extend in a first helical direction to partially or fully enclose the liner 12, followed by a second layer of one or more tapes 14b extending in a second and opposite helical direction to partially or fully enclose the first layer. Where multiple layers of tapes 14 are provided it is optional that the helix angle of adjacent layers alternatives between a positive and negative angle, for example from +40° in one layer to -40° in the next layer, then back to +40° and so on for each subsequent layer. A permeability barrier layer 16 is optionally provided around the outermost layer of tapes 14 to enclose the laminate of liner 12 and tapes 14, and may for example comprise aluminium or the like, although it will be appreciated that any suitable material or combination thereof may be employed. Examples of another metallic material is steel while suitable polymers include EVOH, PET, LCP, PVDC, and PVOH. A further outer jacket 18 may be provided about the barrier layer 16. The barrier layer 16 may also be provided between layers of the tapes 14, around the interior wall of the liner 12, or multiple barrier layers 16 may be provided, both internally and externally of the liner 12.

The tapes 14 are optionally formed from a substrate on which reinforcing fibres are integrated or otherwise captured or retained. The substrate is optionally formed from a thermoplastic, and optionally the same thermoplastic material as the liner 12, for example PEEK, PA, PEI, TPI, HDPE, PP, PVDF, PPS, PPSU, PES, PSU and ABS in order to facilitate the in-situ consolidation between the tapes 14 and liner 12 during the manufacturing of the cryostat 10. This may be achieved by any suitable means, for example the application of heat and/or pressure to bond the tapes 14 to the liner 12. The reinforcing fibres may for example comprise carbon, glass, aramid, and/or basalt. As detailed hereinafter, the tapes 14 may be wound in a continuous manner around the liner 12 with the subsequent application of heat and/or pressure in order to bond the tapes 14 to the liner 12.

The layup arrangement of the tapes 14 and the particular helix angles can be utilised to create a fully consolidated cryostat 10 that has a CTE that is close to or equal to zero, which is significantly lower than the CTE of the thermoplastic liner 12 in isolation. A CTE of close to zero is herein defined as being in the range of +/- 15e-6/°C, but most preferably 0/°C. The provision of the reinforcing tapes 14 does not compromise spooling of the cryostat 10, which is strong enough to sustain typical operating and deployment loads required in a superconducting cable application. As detailed above the layup arrangement of the tapes 14 is such that the helix angle may be varied after each layer from positive to negative, creating a balanced symmetric bi-axial angle laminate surrounding the liner 12. For the typical thermoplastics mentioned above, an optimised bi-axial angle has been found theoretically and experimentally to be between approximately 20°-50°, more preferably between 25° and 45°, depending on the material used, which enables the cryostat 10 to be produced having a CTE close to zero whilst the flexural modulus has not increased substantially, allowing for spooling. Spooling at these helix angles will be dominated by the strain at break of the thermoplastic substrate of the tapes 14 rather than the reinforcing fibres. Helix angles higher than 50°, for example 55° typically used for maximum optimised pressure containment pipes, will not result in a close to zero axial CTE as the thermoplastic will start to dominate the laminate. Whilst lower angles, for example 0°, can have a CTE close to zero this results in a very stiff cryostat 10 and the spooling will be dominated by the fibre strain at break, significantly reducing or preventing spooling of the cryostat 10. The optimised angle for minimum CTE, spoolable stiffness and strain at break and strength for operating and deployment loads has been found to be between approximately 20°-50°, more preferably between 25° and 45°, (positive or negative angle) in the specific balanced layup arrangement described. This arrangement is optimal for long distance HTS systems. This configuration allows the cryostat 10 to achieve a minimum bending radius of at least 0.5m when spooled into a reel.

It has been found that provided the total radial thickness of the layers of tapes 14 is equivalent or greater than the thickness of the thermoplastic liner 12, this CTE minimisation effect will occur where a minimum axial CTE of the cryostat 10 can be found between 20° to 50°, more preferably between 25° and 45°, for multiple types of thermoplastic materials and reinforcement tapes 14. When the thickness of the liner 12 is substantially thicker than the total thickness of the reinforced tapes 14, the liner 12 will dominate and an axial CTE for the cryostat 10 of close to zero cannot be achieved. Using negative CTE fibres in the reinforcement tape 14 such as carbon fibre or aramid fibre will promote this effect even further whereby a negative axial CTE may be achieved. A zero CTE can also be achieved by optimising the helix angle to a non-minimum. A negative CTE may potentially be useful as the thermal loads induced by the expansion upon cryogenic exposure (compression loads) could counteract the effects of the deployment loads (typically pre-tensioned to avoid buckling during deployment and installation subsea). Positive CTE fibres in the tapes 14 such as glass fibres or basalt have also been shown to be capable of creating a zero CTE cryostat 10, despite neither of the constituents have a negative or close to zero CTE.

This phenomenon can be explained by the difference in thermal expansion and stiffness of the reinforcing fibres and the thermoplastic substrate of the tapes 14, and the layup arrangement of layers of alternating helix angles. When the temperature changes, the thermoplastic cannot expand/contract in the longitudinal fibre direction of each layer of tape 14 given the high stiffness and relatively low CTE of the reinforcing fibres constraining it compared to the thermoplastic substrate, and the thermoplastic is therefore forced to move sideways which in turn creates a scissoring effect between the oppositely oriented or angled layers of tape 14, which counteracts the movement of the laminate of tapes 14 and liner 12 in the axial direction creating a laminate where CTE can be even lower than the fibre reinforcement CTE.

The total number of reinforcement layers of tape 14 will be dictated as a minimum by the thickness of the liner 12 so that the zero CTE effect occurs or by the operating and deployment loads. Once the thickness of the liner 12 has been surpassed, the flexural modulus and axial CTE of the cryostat 10 remain relatively constant dominated by the scissoring effect described above. As a result additional reinforcement layers of tape 14 can be added in the specific angle to manage higher operating or deployment loads as needed, without compromising spoolability or CTE. Adding additional layers of tape 14 will typically increase the burst strength of the cryostat 10, allowing higher cryogenic fluid pressures to be contained, and it will also typically increase the tensile capacity of the cryostat 10 against deployment and installation loads such as offshore cable laying operations. Additional layers of tape 14 at different helix angles could be added as long as the laminate of liner 12 and tapes 14 is still dominated in the radial direction by the bi-axial arrangement hereinbefore described. Such additional layers of tape 14 in different orientations may also be beneficial if additional load rating or capabilities are desired, although the preference is to continue the bi-axial laminate to avoid microcracking and create a symmetric and balanced laminate.

The addition of the reinforcement tapes 14 also improves the permeability performance of the liner 12 as the reinforcing fibres can be considered impermeable compared to the thermoplastic substrate of the tape 14. However, care needs to be taken to avoid micro-cracking in the laminate when subjected to cryogenics as this can create leak paths. The bi-axial arrangement layup discussed above has been found to minimise cryogenic microcracking as compared to other layups like cross-ply. Should the laminate develop microcracks, the liner 12 will continue to act as a permeating barrier as the microcracks will not extend beyond the reinforcement tapes 14, so a leak path will not be created and vacuum will not be compromised. Additional aluminium film layers beyond the barrier 16 may be added to improve the permeating performance of the fully reinforced cryostat 10. The aluminium film layers can be wrapped and then adhesively bonded with the cryostat 10. This will create a vacuumtight low permeation barrier that will improve the performance of the cryostat 10.

Without the provision of the reinforcing tapes 14, a thermoplastic cryostat in isolation would typically have low to medium strength, low stiffness, a very high CTE, medium to high permeability, but would not be rated for use at cryogenic temperatures/pressure. Thermoplastics contract or expand significantly more than metals when subjected to a temperature change, and in the case of a cryostat when a cryogenic fluid starts running through it. Relative changes in length for thermoplastic materials subjected to a change in temperature from room temperature to 77K, as measured in a dilatometer compliant with ASTM E228-17, are PEEK -0.8%, HDPE: -2.13%, ABS -1.5%, -1.23%, PA12 -1.64%, PEI -0.85%). In comparison, HTS systems utilising corrugated stainless-steel cryostats undergo a relative change in length of circa -0.29%. Thermoplastic materials on their own would need to use active thermal expansion management systems, for example bellows or roller based systems, to accommodate for such high degree of contraction which would render the system uneconomical and technically very challenging for a long HTS cable system.

Thermoplastic pipe materials could be filled with polymer blends or fibre reinforcement to reduce their CTE. Fillers like Zirconium Tungstate, Carbon fibre, Glass Fibre, Aramid fibre, Basalt fibres can reduce the CTE of a thermoplastic compound. However, changing the CTE of the compound will also affect the manufacturing and other performance characteristics such as stiffness and strength. Typically for thermoplastics, high volume fractions of fillers would be required to achieve CTEs close to stainless steel or aluminium, even then not close to a zero CTE. The addition of such a quantity of fillers will typically increase the stiffness of the pipe/cryostat and reduce the strain at break in such a way that is no longer spoolable. For example, circa 20-30 % Vf of carbon fibre reinforcement into PEEK would reduce the CTE to levels close to stainless steel but would increase stiffness to unworkable levels and reduce the strain at break of the pipe/cryostat where spoolability is no longer possible. In addition, adding high volumes of reinforcement to thermoplastic materials can compromise their cryogenic structural performance through micro-cracking development when in contact with cryogenic fluids. Achieving zero CTE in the axial direction of a thermoplastic cryostat through only filler/blend reinforcement is therefore not technically feasible for long cable HTS systems as it could not be spooled, and it would therefore not be possible to be transported in long lengths. It would also compromise the cryogenic integrity of the cryostat. The laminate structure of the cryostat 10 of the invention, including the thermoplastic liner 12 and surrounding helically extending reinforcing tapes 14, overcomes the above issues, allowing the use of a thermoplastic in applications such as superconducting cable assemblies as detailed in the following examples.

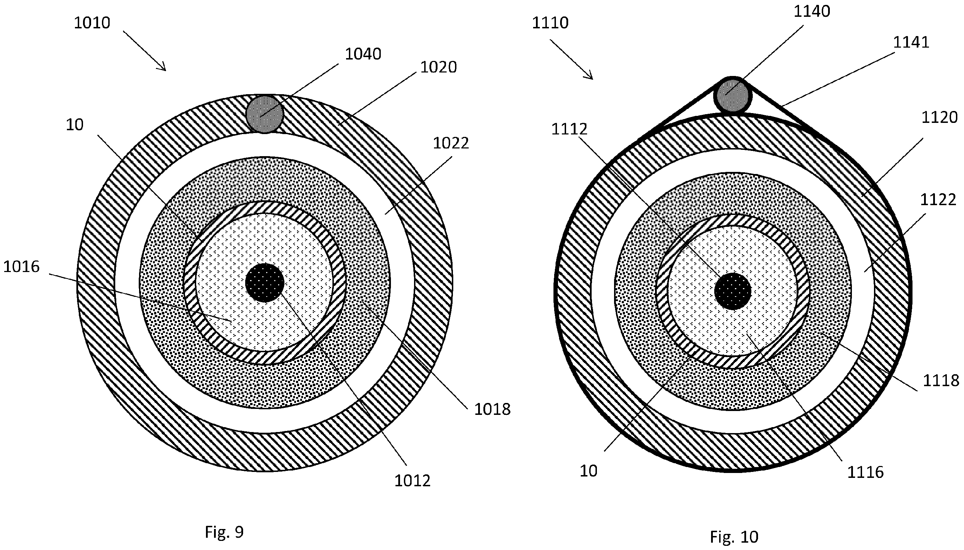

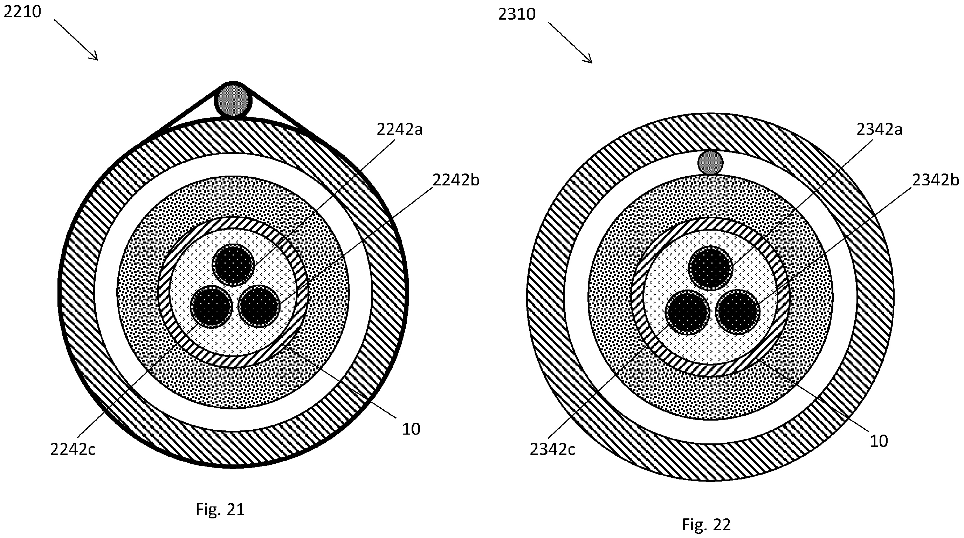

The cryostat 10 may comprise one or more load carrying member configured to carry and/or distribute loads originating from suspension when said cryostat 10 is utilised in a cable system which is suspended. The one or more load carrying member may be a separate load carrying member disposed in or between any two adjacent layers of the cryostat 10, and/or one or more layers of the reinforced thermoplastic cryostat may themselves be adapted or configured to provide load carrying capability and thus form a load carrying member, the mechanical properties of said layers being configured to allow these components to sustain, carry, and/or distribute the forces resulting from suspension. Alternatively. The at least one load carrying member may be disposed within the wider cable system of which the cryostat 10 forms a component part, examples of such arrangements are shown in Figures 9 to 22 and discussed below. It should also be noted that, in some embodiments, one or more load carrying members could be disposed in both the cryostat 10 and the wider cable system.

Figure 2 illustrates an example embodiment of a superconducting cable system, generally indicated as 20, which comprises a superconductor 22 of suitable material, and may comprise a single component or multiple components, for example an array or arrangement of superconducting ribbons or the like. The cable system 20 further comprises the reinforced thermoplastic cryostat 10 hereinbefore described, through a central lumen of which the superconductor22 extends longitudinally and which, in use, is at least partially filled with a cryogenic fluid (cryogen) 24, for example liquid hydrogen, nitrogen, helium, although it is envisaged that any other liquid, gaseous or multiphase cryogens or combinations of cryogens may be utilised. In this way the superconductor 22 is in thermal communication with the cryogen 24 in order to maintain the requisite cryogenic temperature required for superconductivity.

Although in the embodiment illustrated the superconductor 22 is in direct contact with the cryogen 24 in order to establish thermal communication, it is also possible, as illustrated in later embodiments, that indirect contact between the superconductor and cryogen may still provide the desired thermal communication. The operating temperature of the cryogen 24 may vary depending on the operating requirements and/or conditions of the cable system 20 or additional or alternative parameters, and for example where liquid nitrogen is used as the cryogen 24 the operating temperature may be in the range of 67°K to 77°K at an operating pressure of between 0 bar and 40 bar. It should however be understood that these are exemplary parameters and lower or higher temperatures and/or pressures may be employed. It should also be understood that the superconductor 22 could be arranged for example eccentrically or extend helically or the like, while still extending longitudinally relative to the overall length of the cable system 20.

The cable system 20 additionally comprises a layer of thermal insulation 26 surrounding the cryostat 10, and an outer cryostat 28 surrounding and enclosing the foregoing components. A vacuum annulus 30 is defined between the inner cryostat 10 and the outer cryostat 28 to provide additional thermal insulation. The vacuum drawn in the vacuum annulus 30 reduces thermal convection in the cable system 20, and in the embodiment illustrated may be in the range of between 1 and 1000 Pa, although alternative vacuum levels may be employed, for example a hard or soft vacuum. A centralising element 32 may optionally be provided in the vacuum annulus 30 in order to physically maintain the correct position of the inner cryostat 10 concentrically or otherwise with the outer cryostat 28, to ensure a uniform vacuum annulus 30. The outer cryostat 28 provides environmental protection to the cable system 20, reduces thermal losses, avoids permeation of contaminants such as particulate matter and provides structural containment against the surrounding environment, which may for example be a body of water exerting significant pressure on the outer cryostat 28. The outer cryostat 28 is optionally a multilayer construction comprising a smooth bore steel pipe or corrugated steel jacket for environmental protection. Alternatively the outer cryostat 28 may comprise a polymer pipe with one or more optional electrical insulation layers (not shown) and/or a permeation barrier layer that may for example be metallic. The centralising element 32 may be of any suitable shape, configuration and material, and in the embodiment illustrated is helical in shape in order to extend around the circumference of the annulus 30. Finally, the cable system 20 may be provided with external ballast 34, for example where the cable system 20 is to be deployed underwater such as in subsea applications to ensure the cable system 20 sinks to the seabed.

The use of the novel reinforced thermoplastic cryostat 10 provides the desired performance characteristics, in particular a CTE at or near zero to avoid or minimise thermal expansion/contraction issues during use. This avoids or significantly reduces the need for thermal expansion management systems like bellows-based expansion joints. Therefore, the IC reliability and performance are enhanced whilst retaining a smooth-bore pipe shape. This allows pressure losses to be minimised compared to a corrugated cryostat and thus allows for longer superconductor cable systems. The liner 12 can be manufactured through extrusion or the like, a continuous and inexpensive manufacturing process for thermoplastic materials. In addition, the layers of reinforced tape 14 may be subsequently added to the liner 12 through a continuous additive manufacturing method (Automatic Tape Winding, Automatic Fibre Placement or similar) and in-situ consolidated with heat and force applied to the liner 12 and tapes 14 to form a fully bonded cryostat 10. The reinforcement tapes 14 can be deposited at the desired helix angle(s) during this continuous process. The technical performance of the fully bonded cryostat 10 can be varied as required depending on a number of factors such as the material of the liner 12, the material of the tapes 14 (both substrate and fibres), their respective dimensions, and the deposition angle of each of the reinforcement tapes 14 and their arrangement (layup).

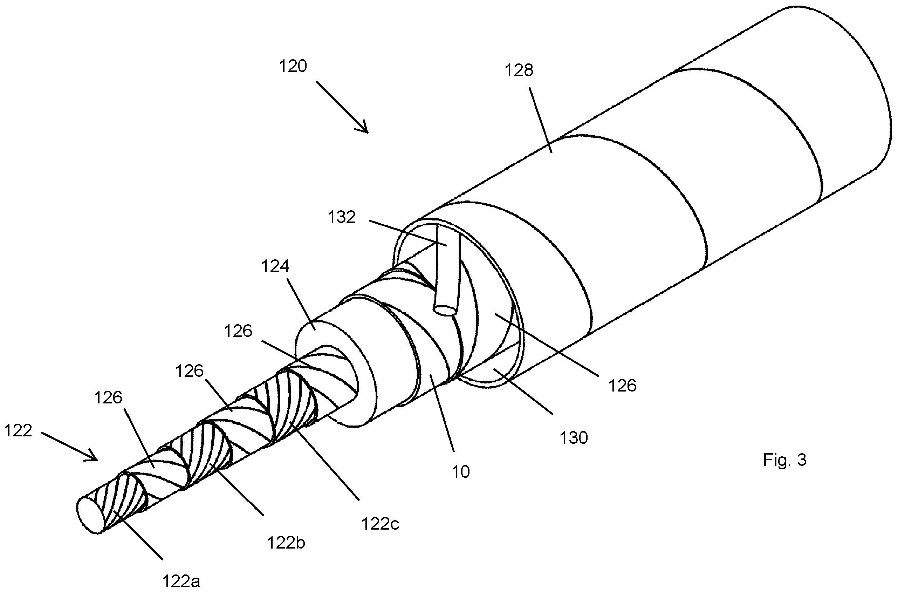

Referring now to Figure 3 a further example embodiment of a superconducting cable system is illustrated and generally indicated as 120. In this second embodiment like components have been accorded like reference numerals and unless otherwise stated perform a like function.

The cable system 120 comprises a superconductor 122 comprised of an inner superconducting element 122a, a first coaxial superconducting element 122b surrounding the inner element 122a and separated therefrom by a layer insulation 126, and a second coaxial superconducting element 122c surrounding the first coaxial superconducting element 122b and separated therefrom by a layer of insulation 126. This arrangement is selected to conduct three phase AC current. It will of course be understood that a single pole or bi-axial bi-pole DC conductor (not shown) could be used as an alternative. The superconductor 122 is located coaxially within the lumen of the reinforced thermoplastic cryostat 10 hereinbefore described, containing a cryogen 124 in which the superconductor 122 is therefore encapsulated such as to establish thermal communication therebetween. A layer of thermal insulation 126 surrounds the inner cryostat 10, and may be of any suitable form, for example comprising one or more of aerogel, nanoporous insulation, layered composite insulation, multilayer insulation or insulation blanket.

An outer cryostat 128 surrounds the insulated inner cryostat 10, with a vacuum annulus 130 defined between the inner cryostat 10 and the outer cryostat 128 to provide additional thermal insulation. An optional centralising element 132 may be provided in the vacuum annulus 130 in order to physically maintain the corrected position of the inner cryostat 10 concentrically or otherwise with the outer cryostat 128 such as to ensure a uniform vacuum annulus region.

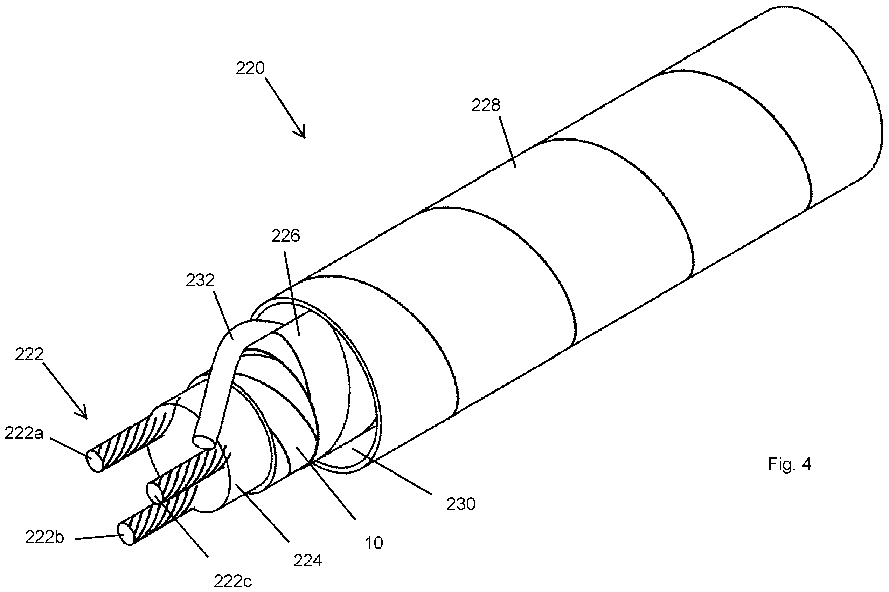

Figure 4 illustrates a yet further example embodiment of a superconducting cable system, generally indicated as 220. In this third embodiment like components have been accorded like reference numerals and unless otherwise stated perform a like function.

The cable system 220 comprises a superconductor 222 in a three core tri-axis configuration comprising a first superconducting element 222a, a second superconducting element 222b and a third coaxial superconducting element 222c arranged in a circular array to facilitate three phase AC. The superconductor 222 is located longitudinally within the lumen of the reinforced thermoplastic cryostat 10, containing a cryogen 224 surrounding the superconductor 222 to establish thermal communication therebetween. A layer of thermal insulation 226 surrounds the cryostat 10, and may be of any suitable form as hereinbefore described. An outer cryostat 228 surrounds the insulated inner cryostat 10, with a vacuum annulus 230 defined therebetween, and an optional centralising element 232 may be provided in the vacuum annulus 230.

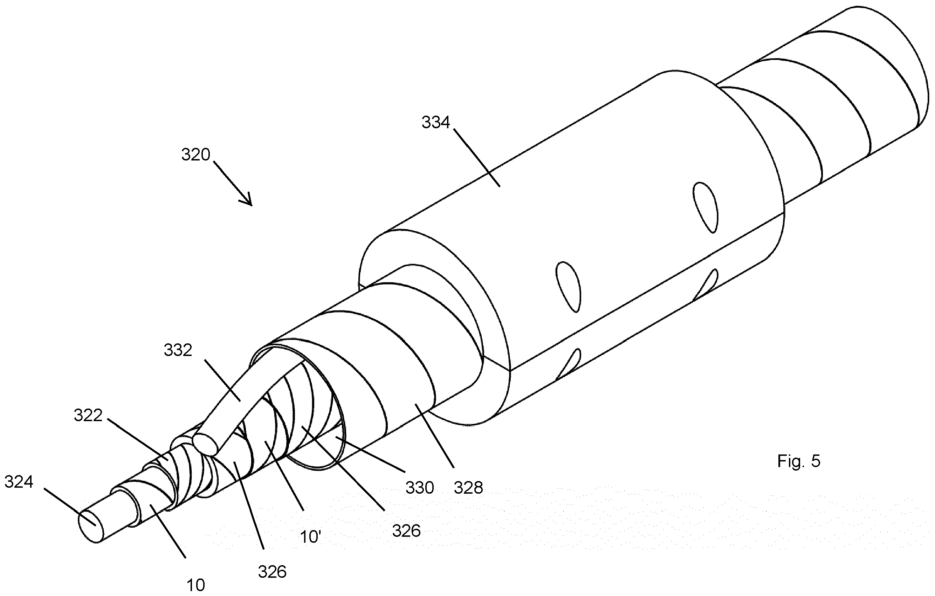

Figure 5 illustrates a yet further example embodiment of a superconducting cable system, generally indicated as 320. In this fourth embodiment like components have been accorded like reference numerals and unless otherwise stated perform a like function.

The cable system 320 comprises a superconductor 322 of tubular form and located longitudinally about an exterior surface of a first instance of the reinforced thermoplastic cryostat 10 in thermal communication therewith. The cryostat 10 contains a cryogen 324 with which the superconductor 322 is in thermal communication via the cryostat 10 which provides structural integrity containing the pressurised cryogen 324 and acting as a permeability barrier.

The cable system 320 additionally comprises a second instance of the cryostat 10' surrounding the first or inner cryostat 10 and again comprising a laminate of a liner and reinforcing tapes. However the second cryostat 10' may be thinner in radial thickness or levels of tape reinforcement, for example if the second cryostat 10 is not subject to internal pressurisation, which may occur purely in the cryostat 10. The second cryostat 10' may therefore have a design and dimensions appropriate to the lower structural and mechanical requirements, and may not provide sufficient dielectric strength in isolation, and may simply provide light mechanical protection for the superconductor 322. Accordingly, an additional electrical and/or mechanical layer may be provided between the superconductor 322 and the second cryostat 10'.

A layer of thermal insulation 326 outwardly surrounds the second cryostat 10', and may be of any suitable form as hereinbefore described. An outer cryostat 328 surrounds the two cryostats 10, 10' with a vacuum annulus 330 defined therebetween, and an optional centralising element 332 may be provided in the vacuum annulus 330. Optional ballast 334 may be provided, for example about an exterior of the outer cryostat 328.

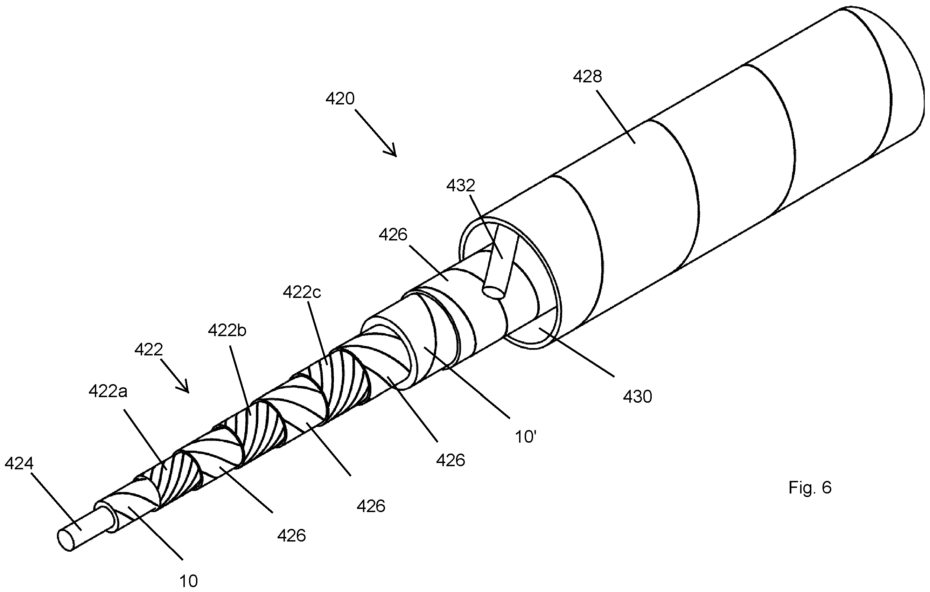

Figure 6 illustrates a yet further example embodiment of a superconducting cable system, generally indicated as 420. In this fifth embodiment like components have been accorded like reference numerals and unless otherwise stated perform a like function.

The cable system 420 is similar to the cable system 320 shown in Figure 6, but with a three phase coaxial superconductor 422 of tubular form and located longitudinally about an exterior surface of the reinforced thermoplastic cryostat 10 in thermal communication therewith. The superconductor 422 is comprised of an inner tubular superconducting element 422a, a first tubular and coaxial superconducting element 422b surrounding the inner element 422a and separated therefrom by a layer of insulation 426, and a second tubular coaxial superconducting element 422c surrounding the first coaxial superconducting element 422b and separated therefrom by a further layer of insulation 426. This arrangement is selected to conduct three phase AC current.

The cryostat 10 contains a cryogen 424 with which the superconductor 422 is in thermal communication via the cryostat 10. The cable system 420 additionally comprises a second cryostat 10' surrounding the first cryostat 10. A layer of thermal insulation 426 surrounds the second cryostat 10, and may be of any suitable form. An outer cryostat 428 surrounds the insulated cryostats 10, 10' with a vacuum annulus 430 defined therebetween, and an optional centralising element 432 may be provided in the vacuum annulus 430.

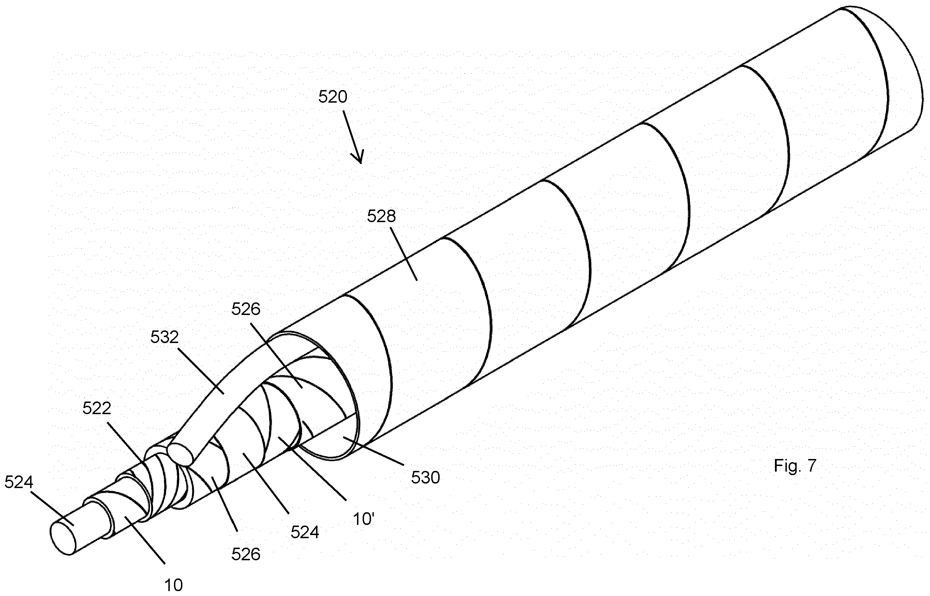

Figure 7 illustrates a yet further example embodiment of a superconducting cable system, generally indicated as 520. In this sixth embodiment like components have been accorded like reference numerals and unless otherwise stated perform a like function.

The cable system 520 comprises a single phase superconductor 522 and located longitudinally about an exterior surface of the reinforced thermoplastic cryostat 10 in thermal communication therewith. The cryostat 10 contains a cryogen 524 with which the superconductor 522 is in thermal communication via the cryostat 10.

The cable system 520 additionally comprises a second cryostat 10' surrounding the first cryostat 10. The second cryostat 10' defines a secondary lumen containing a second supply of the cryogen 524 to provide improved thermal performance. This second supply may comprise a different cryogen 524 to that contained within the cryostat 10. An electrical and/or mechanical layer 526 may be provided between the superconductor 522 and the second cryostat 10'.

A layer of thermal insulation 526 surrounds the second cryostat 10', while an outer cryostat 528 surrounds the insulated inner cryostats 10 and 10', with a vacuum annulus 530 defined therebetween and incorporating an optional centralising element 532.

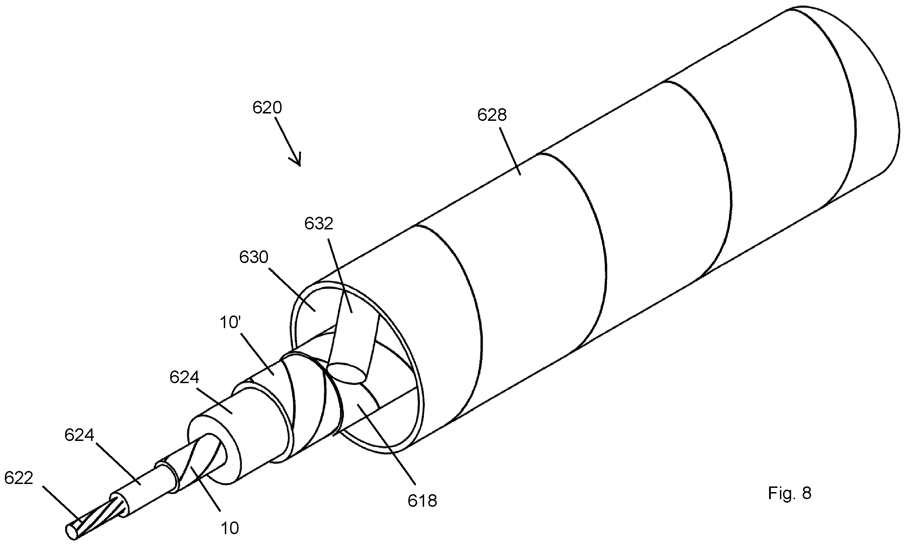

Figure 8 illustrates a yet further example embodiment of a superconducting cable system, generally indicated as 620. In this seventh embodiment like components have been accorded like reference numerals and unless otherwise stated perform a like function.

The cable system 620 comprises a single phase superconductor 622 of suitable form and extending longitudinally and optionally coaxially within the lumen of the reinforced thermoplastic cryostat 10 filled with a cryogen 624. In this way the superconductor 622 is in direct and thermal communication with the cryogen 624 in order to maintain the requisite cryogenic temperature required for superconductivity. The single phase superconductor 622 may of course be replaced with a multiphase superconductor as hereinbefore described.

The cable system 620 additionally comprises a second cryostat 10' surrounding the first cryostat 10. The second cryostat 10' defines a secondary lumen containing a second supply of the cryogen 624 to provide improved thermal performance, which may be the same as or different to the cryogen 624 contained within the first cryostat 10 and which may be maintained at a different temperature. A layer of thermal insulation 626 surrounds the second cryostat 10', while an outer cryostat 628 surrounds the insulated inner cryostats 10 and 10', with a vacuum annulus 630 defined therebetween incorporating an optional centralising element 632.

Figures 9 to 22 illustrate example embodiments of a suspended superconducting cable system comprising the reinforced thermoplastic cryostat as described herein and at least one load carrying member. The at least one load carrying member is configured to carry and/or distribute tensile loads in applications where the superconducting cable system is suspended between supporting structures, for example, but not limited to, overhead applications wherein the superconducting cable system is suspended between pylons or the like. It is highlighted that the embodiments of Figures 9 to 22 examples are provided in relation to how the provision of a load carrying member may be implemented, however these should not be construed as limiting in any way. The at least one load carrying member may be disposed in or between any layers of the superconducting cable system, internally or externally of the superconducting cable system, and/or layers of the superconducting cable systems described herein may themselves be adapted or configured to provide load carrying capability and thus provide one or more load carrying members. For example, one or more layers of the reinforced thermoplastic cryostat may be adapted such that their mechanical properties allow these components to sustain the forces resulting from suspension. Moreover, the embodiments of figures 9 to 22 may be combined in any combination to provide load carrying members disposed in or between any number of layers of a superconducting cable system, and may be supplemented with additional load carrying members and/or load carrying layers not shown in the figure 9 to 22 embodiments. It should also be understood that any embodiment of Figures 1 to 8 may also be provided with load carrying members in or between one or more layers thereof, externally thereof, or said layers may be adapted or configured to themselves provide load carrying capability. In the embodiments of Figures 9 to 22, like components have been accorded like reference numerals and unless otherwise stated perform a like function to the corresponding components of the embodiments of figures 1 to 8.

The at least one load carrying member extends longitudinally of the superconducting cable system and may be a carbon fibre or steel rope or stranded member. However, the load carrying member may comprise any reasonable load carrying or reinforcement member as would be suitable to carry and/or distribute tensile loads due to suspension of the superconducting cable system.

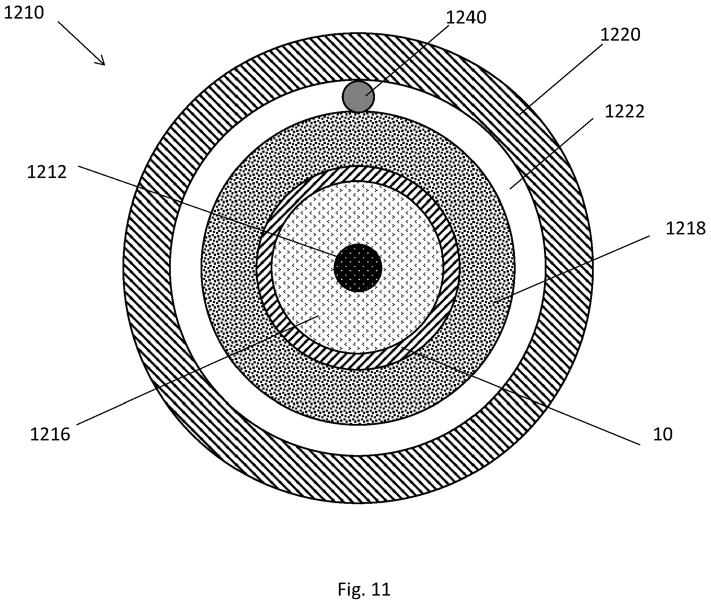

Figure 9 illustrates an embodiment wherein a superconducting cable system 1010, generally analogous to the embodiment of Figure 2, comprises a load carrying member 1040 disposed within the outer cryostat 1020. By the term within in the embodiments of figures 9 to 22, it is meant within the referenced layer or component itself rather than internally thereof of relative to the whole superconducting cable system 1010. As is generally disclosed in relation to the embodiment of figure 2, the figure 11 embodiment comprises, from inner most component to outermost, a superconductor 1012, the herein described reinforced thermoplastic cryostat 10 which may be at least partially filled with cryogen 1016, a layer of thermal insulation 1018, a vacuum annulus 1022, and an outer cryostat 1020. Again, these features comprise the structure and function of the corresponding features of the embodiments of figures 1 to 8 having like names and reference numerals.

Figures 10 and 11 show further embodiments of super conducting cable systems 1110, 1210, which each comprise the general structure of figure 9 in regards to the superconductor 1112, 1212, the herein described reinforced thermoplastic cryostat 10 which may be at least partially filled with cryogen 1116, 1216, a layer of thermal insulation 1118, 1218, a vacuum annulus 1122, 1222, and an outer cryostat 1120, 1220. However, in the embodiment of figure 10, the load carrying member 1140 is disposed externally of the remainder of the superconducting cable system 1110. The load carrying member 1140 may be secured to or attached to the exterior of the outer cryostat 1120 by wrapping, tensioning, or otherwise attaching a securing element 1141 around the outer cryostat 1120 and load carrying member 1140. The securing element 1141 may be a securing wire, strap, or an additional covering layer configured to cover the outer cryostat 1120 and load carrying member 1140 and secure the load carrying member 1140 to the outer cryostat 1120. It should be understood that various methods of providing the load carrying element 1140 externally of the outer cryostat 1120 would be envisaged by the skilled person and as such any reasonable such method would fall within the scope of the present invention. The embodiment of figure 11 illustrates the load carrying member 1240 disposed within the vacuum annulus 1222 of the superconducting cable system 1210.

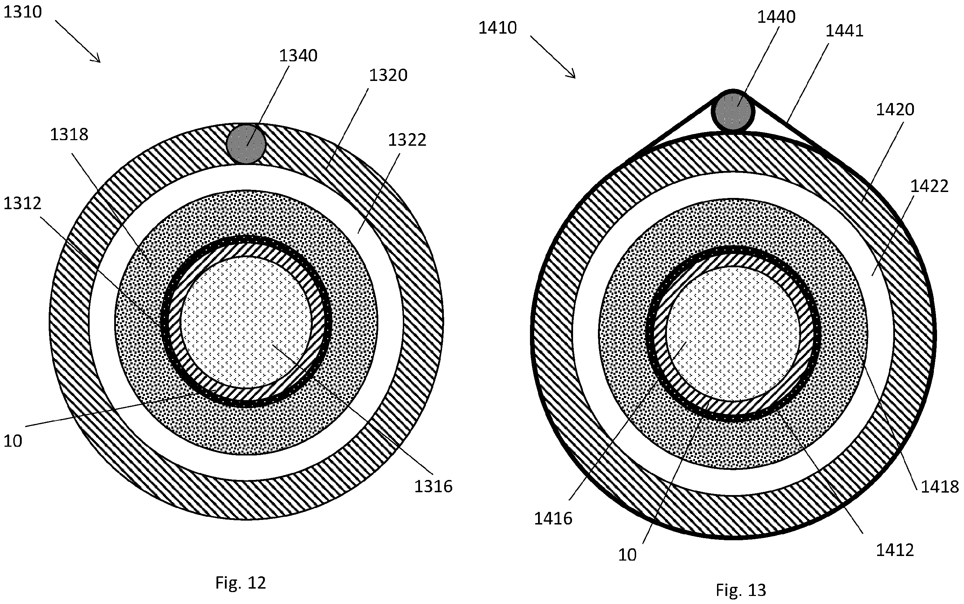

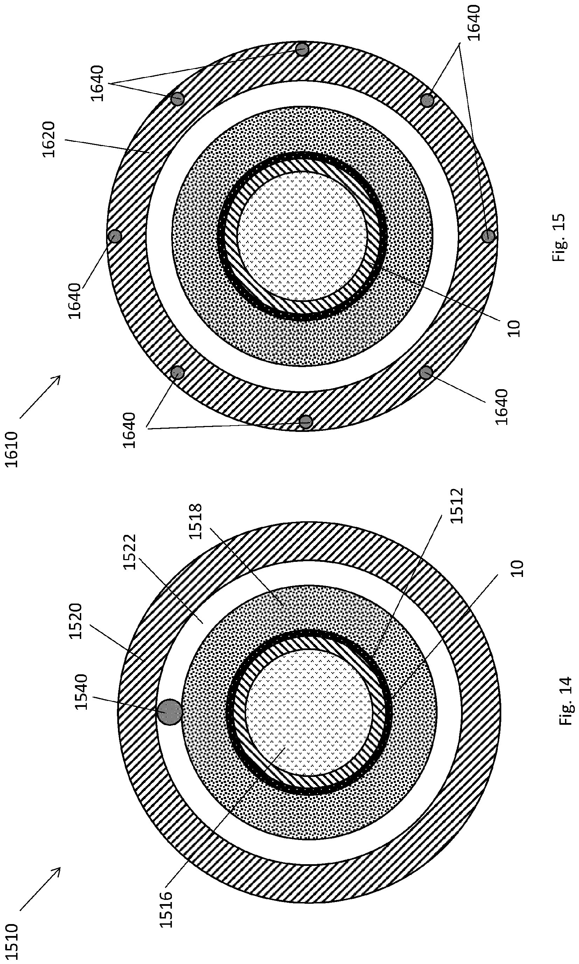

Figure 12 illustrates an embodiment comprising, from inner most component to outermost, the herein described reinforced thermoplastic cryostat 10 which may be at least partially filled with cryogen 1316, a superconductor 1312, a layer of thermal insulation 1318, a vacuum annulus 1322, and an outer cryostat 1320. A load carrying member 1340 is disposed in the outer cryostat 1320. The embodiments of figures 13 to 15 comprise the same structure as the figure 12 embodiment in regards to the reinforced thermoplastic cryostat 10 which may be at least partially filled with cryogen 1416, 1516, 1616, the superconductor 1412, 1512, 1612, the layer of thermal insulation 1418, 1518, 1618, the vacuum annulus 1422, 1522, 1622, and the outer cryostat 1420, 1520, 1620. However in the embodiment of figure 13, the load carrying member 1440 is disposed externally of the remainder of the superconducting cable system 1410 in the manner as described in relation to the embodiment of Figure 10. The embodiment of figure 14 illustrates the load carrying member 1540 disposed within the vacuum annulus 1522 of the superconducting cable system 1510. Figure 15 illustrates an embodiment wherein a plurality of load carrying members 1640 are disposed within the outer cryostat 1620. The plurality of load carrying members 1640 may be radially distributed at regular or irregular spacing. It is noted that, whilst the plurality of load carrying members 1640 are disposed within the outer cryostat 1620, the other layers may instead or in combination comprise one or more load carrying members 1640. This statement is true for any of the embodiments of figures 9 to 22.

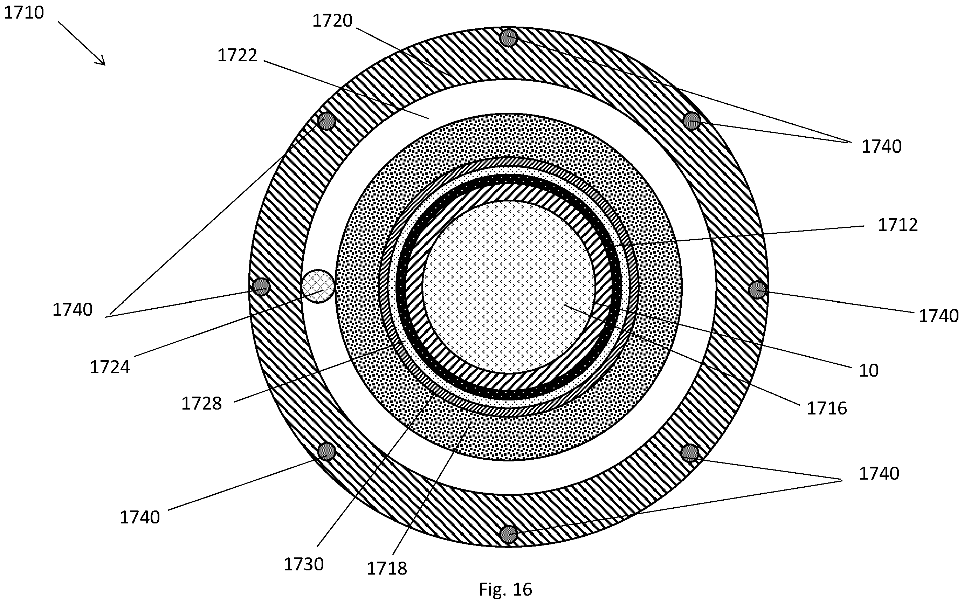

Figure 16 illustrates an embodiment wherein a superconducting cable system 1710, generally analogous to the embodiment of Figure 5 and thus comprising, from innermost component to outermost, the herein described reinforced thermoplastic cryostat 10 which is at least partially filled with cryogen 1716, a superconductor 1712, an additional electrical or mechanical layer 1728, a second inner cryostat 1730, a thermal insulation layer 1718, a vacuum annulus 1722 comprising a centralising element 1724 therein, and an outer cryostat 1720. A plurality of load carrying members 1740 are disposed within the outer cryostat 1720. As with the embodiment of figure 15, the plurality of load carrying members 1740 may be radially distributed at regular or irregular spacing.

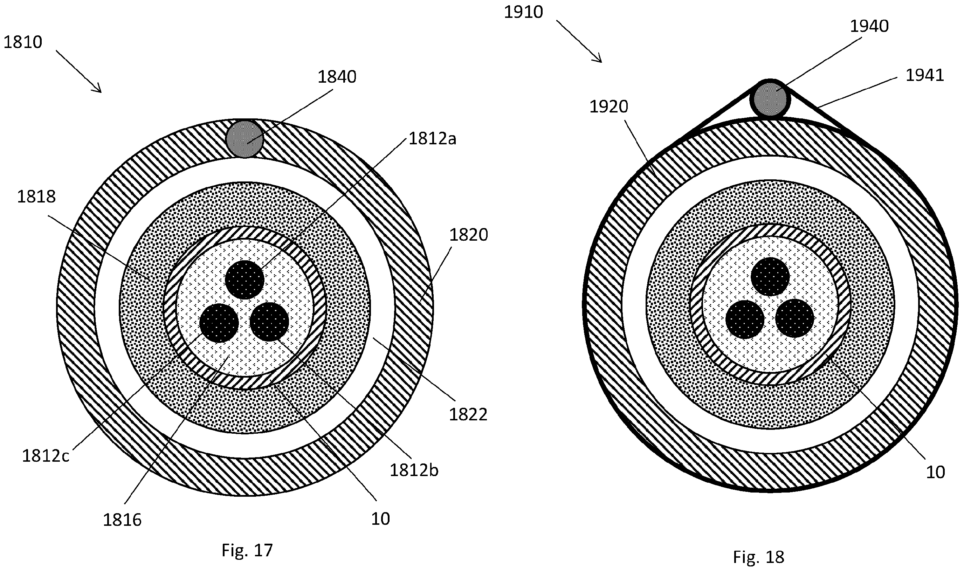

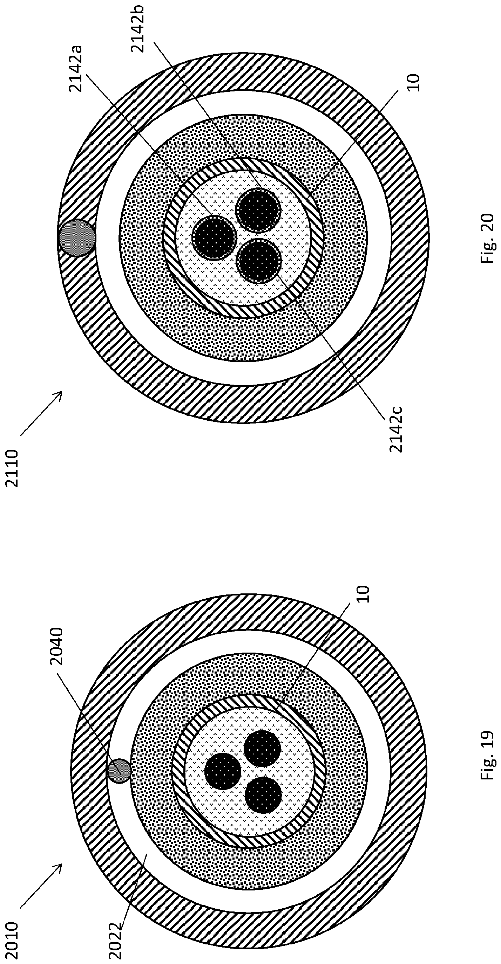

Figure 17 illustrates an embodiment wherein a superconducting cable system 1810, generally analogous to the embodiment of Figure 4, comprises, from inner most component to outermost, three superconducting elements 1812a, 1812b, 1812c, the herein described reinforced thermoplastic cryostat 10 which is at least partially filled with cryogen 1816, a layer of thermal insulation 1818, a vacuum annulus 1822, and an outer cryostat 1820. A load carrying member 1840 is disposed in the outer cryostat 1820. The embodiments of figures 18 and 19 comprise the same structure as the figure 18 embodiment but have their load carrying members 1940, 2040, disposed at different locations. In the embodiment of figure 18, the load carrying member 1940 is disposed externally of the remainder of the superconducting cable system 1910. The load carrying member 1940 may be secured to or attached to the exterior of the outer cryostat 1920 by wrapping, tensioning, or otherwise attaching a securing element 1941 around the outer cryostat 1920 and load carrying member 1940 as discussed above in relation to the embodiment of Figure 10. The embodiment of figure 19 illustrates the load carrying member 2040 disposed within the vacuum annulus 2022 of the superconducting cable system 2010. The embodiments of Figures 20 to 22 share the structure of the embodiments of figures 17 to 19 respectively with the addition of a layer of dielectric material 2142a, 2142b, 2142c, 2242a, 2242b, 2242c, 2342a, 2342b, 2342c disposed around each of the three superconducting elements thereof. Again, it is highlighted that Figures 9 to 22 merely illustrate embodiments and examples of how load carrying members may be incorporated into the superconducting cable system and are not intended to be limiting.

As with the embodiments of Figures 1 to 8, the superconducting cable system of any of figures 9 to 22 may be configured to conduct single pole or multipole direct current (DC) or single phase or multiphase alternating current (AC), and may be physically arranged on concentric axes (for example a tri-axis arrangement in a three phase system) or adjacent axes (a tri-ad arrangement for a three phase system). For AC systems, a so called high temperature superconductor (HTS) or other conductive material or neutral conductor may be added while for AC or DC systems one or more forms of magnetic shielding layers or screen layers may be added to any of the embodiments of figures 9 to 22.

It should also be noted that in addition to or as an alternative to the embodiments of Figures 9 to 22, one or more load carrying members may be disposed in or around the reinforced thermoplastic cryostat 10. The one or more load carrying members of the reinforced thermoplastic cryostat 10 may be one or more separate load carrying members disposed in or between any two adjacent layers of the cryostat 10, and/or one or more layers of the reinforced thermoplastic cryostat may themselves be adapted or configured to provide load carrying capability and thus form a load carrying member, the mechanical properties of said layers being configured to allow these components to sustain, carry, and/or distribute the forces resulting from suspension. Where layers are herein described as being configured or adapted themselves to provide load carrying capability, it is noted that the skilled person would be well aware of many ways in which to accommodate this requirement, for example through material selection, material strengthening, or the like.

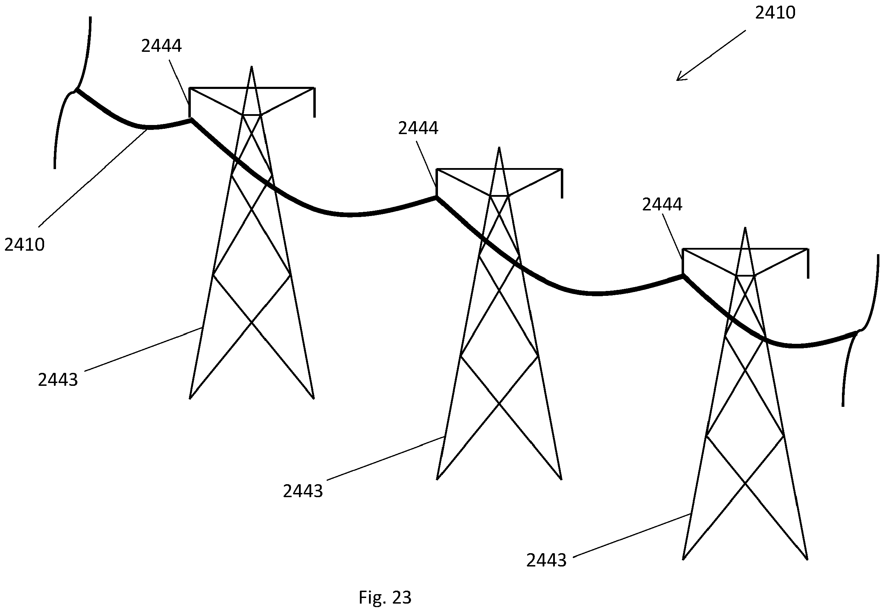

Figure 23 illustrates one embodiment of an implementation of the herein described superconducting cable system 2410 of any of figures 9 to 22 in a suspended application 2410. The superconducting cable system 2410 is suspended between pylons 2443. In the illustrated embodiment the at least one load carrying member comprises mechanical supports for attachment between the superconducting cable system 2410 and the pylons 2443. The mechanical supports 2444 may comprise tensioners, brackets, or a means of distributing the load longitudinally such as a wire may be utilised. It should be understood that, in applications where mechanical supports are present, it may not be necessary for the superconducting cable system to comprise further internally or externally disposed load carrying members such as those illustrated and discussed in regard to Figures 9 to 22, however in some applications the at least one load carrying member may comprise both the longitudinal load carrying members, such as but not limited to those of Figures 9 to 22, and mechanical supports or the like. Figure 23 is just one example of a suspended application and is not intended to be limiting, the herein described superconducting cable systems comprising load carrying members can be deployed in any application requiring suspension.

In certain embodiments of the superconducting cable system utilised in suspended applications, such as but not limited to those of figures 9 to 22, dielectric insulation is not required. Resultantly, as the outer cryostat itself comprises dielectric material and provides dielectric insulation in the case of underground orsubsea transmission line embodiments, such dielectric material may be removed when load carrying members are added to these embodiments and the resulting superconducting cable systems are used in suspended applications. However, dielectric material may be retained in the outer cryostat for any embodiment described herein and the thickness of such material may vary. In any of the aforementioned embodiments, the cryogen may be provided in more than one channel which may comprise any number of liquid and/or gas channels.

The term "cryogen" should not be construed as limiting, the superconducting cable system and cryogen conduit described herein being suitable for use in any low temperature application and thus the use of the term "cryogen" is not intended to convey use in only extreme low temperature applications but rather in any cooled system.

Where the terms "cable" or "cable system" is used herein, it should be understood that this may encompass any cable, including but not limited to a suspended cable system, overhead cable system, buried cable system, submerged cable system. Therefore, where the term cable is used herein it should be understood that this could be interchanged with the term "line" in the context of suspended cable applications.

The invention is not limited to the embodiments described herein but can be amended or modified without departing from the scope of the present invention.

## Claims

1. A reinforced thermoplastic cryostat for a high temperature superconductor comprising a thermoplastic conduit and a plurality of reinforced thermoplastic tapes wound around an exterior surface of the thermoplastic conduit in a helical orientation and at a helix angle of between 20° and 50° to the axial direction, the reinforced thermoplastic cryostat further comprising at least one load carrying member.

2. A reinforced thermoplastic cryostat according to claim 1 in which the thermoplastic tapes extend at a helix angle of between 25° and 45°.

3. A reinforced thermoplastic cryostat according to claim 1 or 2 in which two or more of the thermoplastic tapes extend at different helix angles.

4. A reinforced thermoplastic cryostat according to any of claims 1 to 3 in which two or more of the thermoplastic tapes extend in opposition directions around the exterior surface of the thermoplastic conduit.

5. A reinforced thermoplastic cryostat according to any preceding claim in which the thermoplastic tapes are arranged in layers.

6. A reinforced thermoplastic cryostat according to any preceding claim in which the thermoplastic tapes comprise reinforcing fibres.

7. A reinforced thermoplastic cryostat according to claim 5 in which the reinforcing fibres comprise a negative coefficient of thermal expansion.

8. A reinforced thermoplastic cryostat according to claim 5 or 6 in which the thermoplastic tapes comprise a substrate on which the reinforcing fibres are retained.

9. A reinforced thermoplastic cryostat according to any preceding claim in which the thermoplastic conduit and the thermoplastic tapes comprise the same material.

10. A reinforced thermoplastic cryostat according to any preceding claim comprising a coefficient of thermal expansion of between +/- 15e-6/°C, more preferably a coefficient of thermal expansion of 0/°C.

11. A reinforced thermoplastic cryostat according to any preceding claim in which the thermoplastic conduit comprises a smooth bore.

12. A reinforced thermoplastic cryostat according to any preceding claim comprising at least one impermeable barrier layer.

13. A reinforced thermoplastic cryostat according to any preceding claim comprising a minimum bending radius of at least 0.5m.

14. A superconductor cable system for suspended cable applications comprising a reinforced thermoplastic cryostat, said reinforced thermoplastic cryostat comprising a thermoplastic conduit and a plurality of reinforced thermoplastic tapes wound around an exterior surface of the thermoplastic conduit in a helical orientation and at a helix angle of between 20° and 50° to the axial direction; a superconductor extending longitudinally of the cryostat; a supply of cryogen contained within the cryostat in thermal communication with the superconductor; the superconductor cable system comprising at least one load carrying member.

15. A method of manufacturing a reinforced thermoplastic cryostat for a superconductor cable system comprising the steps of extruding a thermoplastic conduit; winding a plurality of reinforced thermoplastic tapes around an exterior surface of the thermoplastic conduit in a helical orientation at a helix angle of between 20° and 50° to the axial direction; and providing at least one load carrying member.

16. A method according to claim 15 comprising the step of bonding the thermoplastic tapes to the exterior surface of the thermoplastic conduit.
